Europäisches Patentamt

European Patent Office

Office européen des brevets

(11) Publication number: **0 338 369**
**A2**

## (12) EUROPEAN PATENT APPLICATION

(21) Application number: **89106292.9**

(22) Date of filing: **10.04.89**

(51) Int. Cl.4: **F16H 1/46**

(30) Priority: **22.04.88 IT 8254288**

(43) Date of publication of application:
**25.10.89 Bulletin 89/43**

(84) Designated Contracting States:
**AT BE CH DE ES FR GB GR IT LI LU NL SE**

(71) Applicant: **PORTE AUTOMATICHE S.P.A.**
**Piazza de Gasperi 24**
**I-21047 Saronno (Varese)(IT)**

(72) Inventor: **Menuzzo, Angelo**
**Via Tiziano Vecellio 14**
**I-31022 Preganziol Province of Treviso(IT)**

(74) Representative: **Modiano, Guido et al**
**MODIANO, JOSIF, PISANTY & STAUB**
**Modiano & Associati Via Meravigli, 16**
**I-20123 Milan(IT)**

(54) **Gear reduction unit.**

(57) The gear reduction unit comprises a toothed pinion (2) connected to a drive shaft and arranged coaxially to a first fixed crown gear (3). A second movable crown gear (4) is arranged facing the first crown gear (3) and is in turn connected to a driving shaft (5). The first crown gear (3) and the second crown gear (4) have the same pitch diameter but a number of teeth differing by at least one unit. At least one free planetary gear (8) is furthermore interposed between the pinion (2), the first crown gear (3) and the second crown gear (4).

Fig.1

# GEAR REDUCTION UNIT

The present invention relates to a gear reduction unit.

The use of mechanical reduction units applied to motors is currently known, for example for moving gates or doors; said gear reduction units are constituted by directly meshing gears of different diameters.

These known mechanical reduction units however do not provide high transmission ratios and are bulky.

The use of worm screws as mechanical reduction units is also known; though they have a high transmission ratio and non-reversible motion, said worm screws are very bulky.

The main aim of the present invention is therefore to eliminate the disadvantages described above in known types of reduction units by providing a gear reduction unit which provides, together with a high transmission ratio and non-reversible motion, considerable structural compactness and extremely simple construction.

Within the scope of the above described aim, an important object is to provide a gear reduction unit having very low manufacturing costs.

The above described aim and objects, as well as others which will become apparent hereinafter, are achieved by a gear reduction unit as defined in claim 1.

Further characteristics and advantages of the invention will become apparent from the detailed description of some preferred but not exclusive embodiments thereof, illustrated only by way of indicative but non-limitative example in the accompanying drawings, wherein:

figure 1 is a partial sectional view of a first embodiment of a gear reduction unit according to one aspect of the invention;

figure 2 is a transverse view of the reduction unit taken along the sectional plane II-II of figure 1;

figure 3 is a view, similar to figure 1, of a reduction gear unit according to another aspect of the invention.

With reference to the above-mentioned figures, the reference numeral 1 indicates a gear reduction unit which comprises a toothed pinion 2 connected or keyed to a drive shaft (not illustrated in the figure), which may be associated with any suitable power assisted drive means such as a motor; a first crown gear 3 is arranged coaxially to said pinion and is rigidly associated with the stationary motor casing.

A second freely rotating crown gear 4 is arranged facing said first crown gear 3, coaxially to the axis of said toothed pinion 2, and is connected to a driving shaft 5.

The first crown gear 3 and the second crown gear 4 advantageously have the same pitch diameter and respectively have a first set of teeth 6 and a second set of teeth 7 differing by at least one unit; by way of example, the first set of teeth 6 of the first crown gear 3 may have a number of teeth which exceeds by one unit the number of the second set of teeth 7 present on the second crown gear 4.

The toothed pinion 2 may affect the entire longitudinal extension of the first crown gear 3 and of the second crown gear 4, its terminal end 20 being possibly advantageously guided at the second crown gear 4.

A planetary gear 8 is interposed between a first portion of the toothed pinion 2, and the first crown gear 3 and between a second portion of the toothed pinion 2 and the second crown gear 4. The planetary gear 8 is axially retained by the first and second crown gears 3,4 and radially retained by its meshing engagement with the teeth of the pinion 2 and with the first set of teeth 6 formed on the first crown gear 3 and the second set of teeth 7 formed on the second crown gear 4.

The operation of the reduction unit is as follows: once the toothed pinion 2 is rotated by a motor, the rotation of said toothed pinion 2 causes rotation of the planetary gear 8.

Though the first set of teeth 6 formed on the first crown gear 3 and the second set of teeth 7 formed on the second crown gear 4 expediently differ by one tooth, they have the same pitch diameter obtained by appropriately correcting the shape of the teeth: thus, upon each complete rotation, the second set of teeth 7 on the second crown gear 4 advances by one pitch with respect to the first set of teeth 6 on the first crown gear 3, and since the rotation of the planetary gear 8 is a function of the ratio between the toothed pinion 2 and the first set of teeth 6 on the first crown gear 3, the total transmission ratio is given by $Z_r . Z_r / Z_m$, i.e. $Z_r / Z_m$, where $Z_c$ is the number of teeth of the second crown gear 4 and $Z_r$ is the number of teeth of the first crown gear 3 (equal to $Z_c - 1$) and $Z_m$ is the number of teeth of the planetary gear 8.

In order to have a more balanced reduction unit, it is also possible to use a greater number of planetary gears; in this case the difference in the teeth must be two or more and the reduction is $Z_r / 2 . Z_m$.

The use of more than two planetary gears is deemed inconvenient since a large difference in the number of teeth on the same pitch diameter would lead to a substantial modification of the shape of the tooth.

It has thus been observed that the invention achieves the intended aim and objects, a gear reduction unit having been provided which has a high transmission ratio, non-reversible motion and considerable structural compactness combined with very simple construction.

The reduction unit can thus be manufactured at low cost, thus increasing its commercial competitiveness.

The invention is furthermore susceptible to numerous modifications and variations, all of which are within the scope of the same inventive concept.

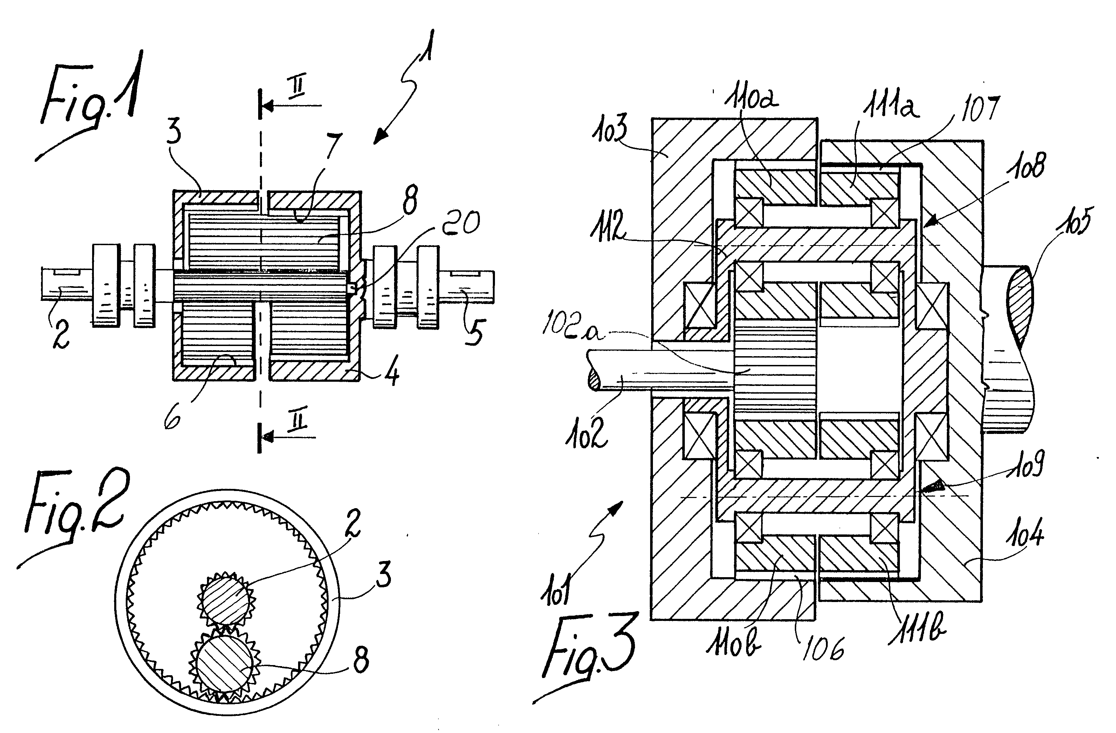

Thus, for example, figure 3 illustrates a reduction unit 101 according to another aspect of the invention, comprising a toothed pinion 102. A first crown gear 103 is arranged coaxially to said toothed pinion and is rigidly associated with a stationary member such as, e.g., the casing of a motor (not illustrated) connected to the pinion 102.

A second crown gear 104 is arranged facing the first crown gear 103 and is coaxial to the toothed pinion 102; said second crown gear being keyed on a transmission shaft 105.

Also according to this second aspect of the invention, the first crown gear 103 and the second crown gear 104 have the same pitch diameter and a number of teeth which again expediently differs by one unit.

In this embodiment, the toothed pinion 102 has a set of teeth 102a the longitudinal extension whereof advantageously does not extend beyond the plane of arrangement of the end of the first crown gear 103.

A first planetary gear 108 and a second planetary gear 109 are interposed between the toothed pinion 102 and the first crown gear 103 and the second crown gear 104, associated with the driving shaft 105. Each of said planetary gears 108,109 is constituted by a first semi-planetary gear, respectively 110a and 110b, and by a second semi-planetary gear, respectively 111a and 111b.

The first semi-planetary gears 110a,110b and the second semi- planetary gears 111a,111b are mutually axially connected and rotate freely with respect to a suitable casing 112 rotatably associated with the first crown gear 103 and with the second crown gear 104.

The peculiarity of this second embodiment resides in the fact that the toothed pinion 102 interacts with the teeth of the first semi-planetary gears 110a and 110b, which have a number of teeth equal to the set of teeth 106 of said first crown gear 103.

The semi-planetary gears 111a and 111b instead each has a number of teeth equal to that of the set of teeth 107 of the second crown gear 104.

This particular embodiment, besides achieving the intended aims and object, has the advantage that no sliding occurs between the teeth since they mesh perfectly.

Naturally the materials and dimensions constituting the individual components of the reduction unit may be the most pertinent according to the specific requirements.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Gear reduction unit, characterized in that it comprises a toothed pinion (2,102) connectable to a drive shaft, a first fixed crown gear (3,103) being arranged coaxially to said toothed pinion (2,102), a second movable crown gear (4,104) being arranged facing said first crown gear (3,103) and connected to a driving shaft (5,105), said first crown gear (3,103) and said second crown gear (4,104) having the same pitch diameter and a number of teeth (6,7,106,107) differing by at least one unit, idle planetary gear means (8,108,109) being interposed between said pinion (2,102), said first crown gear (3,103) and said second crown gear (4,104).

2. Gear reduction unit according to claim 1, characterized in that said planetary gear means (108,109) is composed of a first semi-planetary gear (110a,110b) and a second semi-planetary gear (111a,111b) arranged axially and fixed with respect to one another, having a number of teeth respectively equal to that of said first crown gear (103) and to that of said second crown gear (104).

3. Reduction unit according to claim 1 or 2, characterized in that said second crown gear (4,104) is arranged coaxially to the axis of said toothed pinion (2,102), said toothed pinion (2,102) having a longitudinal extension equal to the interspace between said first crown gear (3,103) and said second crown gear (4,104).

4. Reduction unit according to claim 1, 2, or 3, characterized in that the terminal end of said toothed pinion (2,102) is preferably guided at said second crown gear (4,104).

5. Reduction unit according to claims 1, 2, or 3, characterized in that said first crown gear (3,103) and said second crown gear (4,104) respectively have a first (6,106) and a second (7,107) set of teeth differing by at least one tooth.

6. Reduction unit according to claim 3, characterized in that said planetary gear means (8,108,109) has a longitudinal extension approximately equal to the interspace between said first crown gear (3,103) and said second crown gear (4,104) and interacts with said toothed pinion (2,102) and with said first set of teeth (6,106) and said second set of teeth (7,107).

7. Reduction unit according to claim 1 or 2, characterized in that said planetary gear means (108,109) comprises a first planetary gear (108) and a second planetary gear (109), each constituted by a first semi-planetary gear (110a,110b) and by a second semi-planetary gear (111a,111b), interacting respectively with said first crown gear (103) and with said second crown gear (104).

8. Reduction unit according to claim 2 or 7, characterized in that said first semi-planetary gear (110a,110b) and said second semi-planetary gear (111a,111b) are arranged axially, and fixed to one another and rotate freely with respect to a casing (112) rotatably associated with said first crown gear (103) and said second crown gear (104).

9. Reduction unit according to claim 2, 7, or 8, characterized in that said toothed pinion (102) has a set of teeth interacting with a corresponding set of teeth of said first semi-planetary gear (110a,110b).

10. Reduction unit according to claim 2, 7, 8, or 9, wherein said first semi-planetary gear (110a,110b) has a number of teeth equal to that of the first crown gear (103) and preferably wherein said second semi-planetary gear (111a,111b) has a number of teeth equal to that of the second crown gear (104).

Fig.1

Fig.2

Fig.3

EP 0 338 369 A2